# EUROPÄISCHE PATENTSCHRIFT

(11) **EP 0 752 547 B1**
(45) Veröffentlichungstag und Bekanntmachung des Hinweises auf die Patenterteilung: **12.01.2000**
(21) Anmeldenummer: 96110105.2
(22) Anmeldetag: 22.06.1996
(51) Int. Cl.: F16H 59/04, F16H 59/02, G05G 25/02, B60K 20/04, B60K 20/02

(54) **Handschaltung zur Betätigung eines Wechselgetriebes**
Shift device for manual control of gearbox
Dispositif de changement pour commande manuelle d'une boîte de vitesses

(30) Priorität: 03.07.1995 DE 19523618
(43) Veröffentlichungstag der Anmeldung: 08.01.1997
(73) Patentinhaber: ADAM OPEL AG, 65423 Rüsselsheim (DE)
(72) Erfinder: Renk, Rolf, Dipl.-Ing. (FH), 65462 Ginsheim (DE)
(74) Vertreter: Kümpfel, Heinz, Dipl.-Ing.

(56) Entgegenhaltungen:
- EP-A- 0 049 031
- DE-A- 2 924 940
- DE-A- 3 020 544
- FR-A- 1 215 946
- GB-A- 405 036
- US-A- 5 213 002

## Beschreibung

Die Erfindung betrifft eine Handschaltung zur Betätigung eines Wechselgetriebes eines Kraftfahrzeugs, bei der ein Handschalthebel mit einem unteren Ende in einem Schaltgehäuse allseitig schwenkbar gelagert ist und der im Bereich seines unteren Endes eine Schaltkugel hat, welche in ein Kurbelauge einer Schaltstange eingreift, wobei Spiel zwischen der Schaltkugel und dem Kurbelauge durch ein an der Schaltkugel vorgesehenes Federelement ausgeglichen ist.

Eine Handschaltung der vorstehenden Art ist Gegenstand der DE-C-30 20 544. Bei der bekannten Handschaltung ist das Federelement durch einen elastischen Ring gebildet, welcher in einer in Höhe des Kugeläquators der Schaltkugel umlaufenden Schaltkugelnut eingesetzt ist. Der Sinn dieses elastischen Ringes liegt darin, das Spiel zwischen der Schaltkugel und dem Kurbelauge aufzuheben, weil ein solches Spiel aufgrund der vom Triebwerk übertragenen Schwingungen zu Klapper- und Rasselgeräuschen führen würde. Außerdem vermittelt ein Spiel im Schaltkugelbereich ein unexaktes Schaltgefühl, da schon geringes Spiel der Schalthebelkugel durch die Hebelübersetzung des Handschalthebels am Schalthebelkopf zu einem erheblichen Leerweg führt.

Die bekannte Ausführung mit einem elastischen Ring in einer umlaufenden Nut ist relativ teuer in der Herstellung, da die Schaltkugel mit ihrer umlaufenden Nut zur Toleranzreduzierung relativ genau bearbeitet werden muß. Weiterhin muß man den elastischen Ring, bei dem es sich um einen Gummiring handelt, befetten, damit er nicht unerwünscht rasch verschleißt und das Schalten nicht durch hohe Schaltkräfte erschwert oder gar unmöglich wird. Das Befetten muß mit einem speziellen Fett geschehen, damit der Gummiring nicht quillt, was wiederum zu einer Schwergängigkeit führen würde. Die Notwendigkeit der Befettung birgt bei der Montage das Risiko in sich, daß diese vergessen oder versehentlich ein zum Quellen führendes Fett verwendet wird.

Der Erfindung liegt das Problem zugrunde, eine Schalthebellagerung der eingangs genannten Art so auszubilden, daß Schaltspiel auf möglichst einfache und zuverlässige Weise verhindert werden kann.

Dieses Problem wird erfindungsgemäß dadurch gelöst, daß das Federelement durch einen Randbereich der Schaltkugel gebildet ist, welcher aufgrund eines in die Schaltkugel führenden Schlitzes nur an einer Seite mit der übrigen Schaltkugel Verbindung hat.

Durch eine solche Gestaltung der Schaltkugel wird der bisher notwendige, in eine umlaufende Nut der Schaltkugel einzusetzende elastische Ring eingespart, da die Schaltkugel selbst durch ihren elastischen Randbereich die das Spiel ausgleichende Federfunktion übernimmt. Zugleich ergibt sich eine Verringerung des Verschleißes, weil der elastische Randbereich aus dem gleichen, verschleißfesten Material bestehet wie die Schaltkugel selbst. Weiterhin ist bei der Montage die Gefahr eines Fehlers durch Vergessen der speziellen Befettung oder gar durch Nichteinsetzen des elastischen Ringes ausgeschlossen.

Der das Federelement bildende Randbereich vermag sich bereits bei relativ geringen Kräften elastisch zu verformen, wenn gemäß einer vorteilhaften Weiterbildung der Erfindung dieser Randbereich durch zwei von entgegengesetzter Seite parallel zueinander in die Schaltkugel führende Schlitze von der übrigen Schaltkugel teilweise abgetrennt ist.

Der Handschalthebel nimmt in Leerlaufstellung eine exakte Mittelstellung ein und neigt besonders wenig zu Schwingungsübertragungen, wenn gemäß einer anderen Weiterbildung der Erfindung an zwei gegenüberliegenden Seiten der Schaltkugel jeweils ein ein Federelement bildender Randbereich vorgesehen ist.

Von Vorteil ist es, wenn alle Schlitze parallel zueinander verlaufen. Hierdurch ist die Schaltkugel nur in Richtung der quer zu den Schlitzen verlaufenden Achse elastisch, so daß in der quer dazu verlaufenden Richtung hohe Kräfte ohne Beanspruchung der elastischen Randbereiche übertragen werden können.

Besonders vorteilhaft ist es, wenn die Schlitze parallel zur Schaltrichtung des Handschalthebels verlaufen. Die Elastizität wirkt sich dann nur in Wählrichtung des Handschalthebels aus, so daß es beim größere Kräfte erforderlichen Schalten nicht zu einer Überbeanspruchung der elastischen Randbereiche kommen kann. Auch beim Wählen läßt sich die Beanspruchung ausreichend begrenzen, da sich nach einer geringen Schaltkugelbewegung die seitlich der elastischen Randbereiche verlaufenden, nicht elastischen Bereiche gegen das Kurbelauge anlegen.

Eine vorteilhafte Materialeinsparung bei der Herstellung der meist aus Kunststoff bestehenden Schaltkugel läßt sich dadurch erzielen, daß die Schaltkugel zusätzlich zu den zwei jeweils an einer Seite von entgegengesetzten Richtungen her in sie eindringenden, die Federelemente bildenden Randbereiche erzeugenden Schlitzen zwischen diesen Paaren von Schlitzen weitere in die Schaltkugel hineinführende Schlitze hat.

Falls gewünscht, kann man zusätzlich zur elastischen Abstützung in Wählrichtung auch eine elastische Abstützung in Schaltrichtung vorsehen, indem die Schaltkugel zusätzlich zu den beiden, an entgegengesetzten Seiten vorgesehenen, die Federelemente bildenden Randbereichen an zumindest einer hierzu in einem Winkel von 90° liegenden Seite zumindest eine aus der Kontur der Schaltkugel geringfügig hervorspringende, dünne Federzunge hat, welche durch zwei in die Schaltkugel führende Schlitze gebildet ist.

Das Entformen der aus Kunststoff erzeugten Schaltkugel ist besonders einfach, wenn gemäß einer anderen Weiterbildung der Erfindung die Schlitze sich zum Inneren der Schaltkugel hin im Querschnitt verengen.

Falls besondere Elastizitätseffekte erwünscht sind, kann man auch in der Schaltkugel in unterschiedliche Richtungen führende Schlitze vorsehen.

Die Erfindung läßt zahlreiche Ausführungsformen zu. Zwei davon sind in der Zeichnung dargestellt und werden nachfolgend beschrieben. Diese zeigt in
- Fig. 1:: eine schematische Seitenansicht einer Handschaltung gemäß der Erfindung;
- Fig. 2:: einen horizontalen Schnitt durch den Schalthebel der Handschaltung oberhalb seiner Schaltkugel;
- Fig. 3:: einen der Figur 2 entsprechenden Schnitt durch eine zweite Ausführungsform der Schaltkugel.

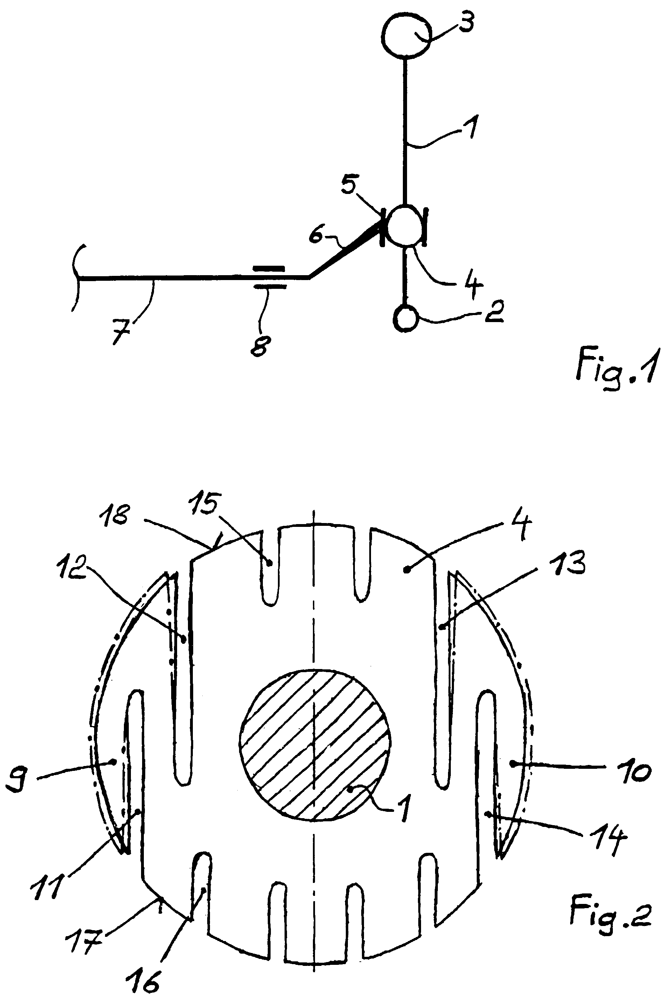

Die Figur 1 zeigt schematisch einen Handschalthebel 1, welcher an seinem unteren Ende eine übliche Schalthebellagerung 2 aufweist, so daß er aus einer Neutralstellung heraus nach allen Seiten verschwenkt werden kann. An seinem oberen Ende hat der Handschalthebel 1 als Handhabe einen üblichen Schalthebelknopf 3 und zwischen diesem Schalthebelknopf 3 und der Schalthebellagerung 2 eine Schaltkugel 4, deren besondere Gestaltung Gegenstand der Erfindung ist.

Die Schaltkugel 4 sitzt in einem Kurbelauge 5 einer Kurbel 6, die fest mit einer Schaltstange 7 verbunden ist. Diese Schaltstange 7 ist auf übliche Weise in Lagern 8 axial verschiebbar und um ihre Längsachse verdrehbar gelagert und führt zum Wechselgetriebe des Kraftfahrzeugs.

Die Figur 2 läßt die Gestaltung der Schaltkugel 4 deutlich erkennen. Diese hat an zwei gegenüberliegenden Seiten jeweils ein Federelement 9, 10, welches in beiden Fällen durch einen Randbereich der Schaltkugel 4 dadurch gebildet ist, daß bezogen auf das Kraftfahrzeug von vorn und hinten an jeder Seite zwei Paare paralleler und mit geringem gegenseitigen Abstand zueinander verlaufender Schlitze 11, 12 und 13, 14 in die Schaltkugel 4 führen. Zwischen diesen Paaren von Schlitzen 11, 12 und 13, 14 führen weitere Schlitze 15, 16 von vorn und hinten in die Schaltkugel 4, welche jedoch weniger tief in sie eindringen und primär die Aufgabe haben, Material und Gewicht bei der Herstellung der Schaltkugel 4 einzusparen.

In Figur 2 sind die Federelemente 9, 10 in durchgezogenen Linien in der Position dargestellt, welch sie innerhalb des Kurbelauges 5 einnehmen. Sie liegen dann mit elastischer Vorspannung gegen die Wandung dieses Kurbelauges an. Strichpunktiert ist in Figur 2 für die Federelemente 9, 10 auch die entspannte Stellung dargestellt. Die Elastizität der Federelemente 9, 10 wirkt sich nur aus, wenn in Figur 2 gesehen der Handschalthebel nach rechts oder links verschwenkt wird, wenn also eine Gangebene gewählt wird. Beim Schalten, wenn der Handschalthebel nach vorn oder hinten verschwenkt wird, wirkt sich die Elastizität nicht aus, da die Schaltkugel 4 in dieser Richtung starr ist. Man könnte jedoch auch die Schaltkugel um 90° verdreht einbauen, um nur in Schaltrichtung die Elastizität wirken zu lassen. Denkbar wäre auch ein gegenüber Figur 2 um 45° verdrehter Einbau.

Bei der dargestellten Einbaulage ist auch beim Wählen eine Überbeanspruchung der Federelemente 9, 10 nicht zu befürchten, weil sich nach einer geringen Verschiebung nach rechts oder links die Schaltkugel 4 mit an den Federelementen 9, 10 angrenzenden Wandbereichen 17, 18 gegen die Innenmantelfläche des Kurbelauges 5 anlegt.

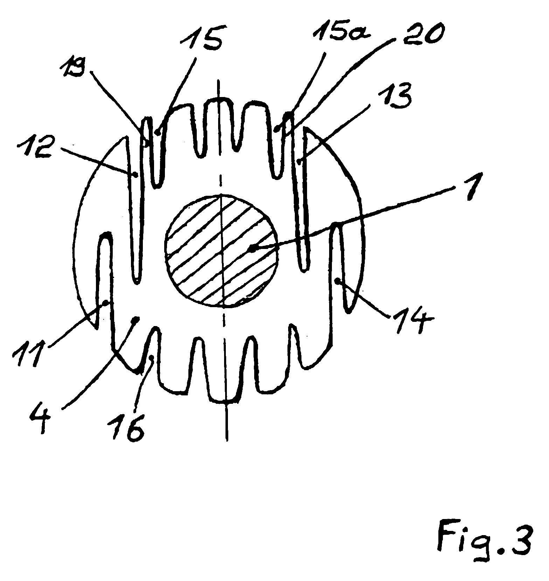

Die Figur 3 zeigt, daß sich sämtliche Schlitze 11 - 16 zum Inneren der Schaltkugel 4 hin im Querschnitt verengen, was der Entformbarkeit der Schaltkugel 4 beim Spritzgießen dient. Zu erkennen ist weiterhin in Figur 3, daß zwischen den Schlitzen 12, 15 und 13, 15a eine relativ schmale Federzunge 19, 20 gebildet ist, welche nach vorn hin über die Kontur der Schaltkugel 4 vorspringt. Im montierten Zustand liegen diese Federzungen 19, 20 mit ihrer vordersten Begrenzung gegen die Wandung des Kurbelauges 5 an und drücken dadurch die Schaltkugel 4 nach hinten.

## Patentansprüche

1. Handschaltung zur Betätigung eines Wechselgetriebes eines Kraftfahrzeugs, bei der ein Handschalthebel (1) mit einem unteren Ende (2) in einem Schaltgehäuse allseitig schwenkbar gelagert ist und der im Bereich seines unteren Endes eine Schaltkugel (4) hat, welche in ein Kurbelauge (5) einer Schaltstange (6, 7) eingreift, wobei Spiel zwischen der Schaltkugel (4) und dem Kurbelauge (5) durch ein an der Schaltkugel (4) vorgesehenes Federelement ausgeglichen ist, **dadurch gekennzeichnet**, daß das Federelement (9, 10) durch einen Randbereich der Schaltkugel (4) gebildet ist, welcher aufgrund eines in die Schaltkugel (4) führenden Schlitzes (11, 12, 13, 14) nur an einer Seite mit der übrigen Schaltkugel (4) Verbindung hat.

2. Handschaltung nach Anspruch 1, **dadurch gekennzeichnet**, daß der das Federelement (9, 10) bildende Randbereich durch zwei von entgegengesetzter Seite parallel zueinander in die Schaltkugel (4) führende Schlitze (11, 12; 13, 14) von der übrigen Schaltkugel (4) teilweise abgetrennt ist.

3. Handschaltung nach den Ansprüchen 1 oder 2, **dadurch gekennzeichnet**, daß an zwei gegenüberliegenden Seiten der Schaltkugel (4) jeweils ein ein Federelement (9, 10) bildender Randbereich vorgesehen ist.

4. Handschaltung nach zumindest einem der vorangehenden Ansprüche, **dadurch gekennzeichnet**, daß alle Schlitze (11 - 14) parallel zueinander verlaufen.

5. Handschaltung nach zumindest einem der vorangehenden Ansprüche, **dadurch gekennzeichnet**, daß die Schlitze (11 - 14) parallel zur Schaltrichtung des Handschalthebels (1) verlaufen.

6. Handschaltung nach zumindest einem der vorangehenden Ansprüche, **dadurch gekennzeichnet**, daß die Schaltkugel (4) zusätzlich zu den zwei jeweils an einer Seite von entgegengesetzten Richtungen her in sie eindringenden, die Federelemente (9, 10) bildenden Randbereiche erzeugenden Schlitzen (11 - 14) zwischen diesen Paaren von Schlitzen (11, 12; 13, 14) weitere in die Schaltkugel (4) hineinführende Schlitze ( 15, 16) hat.

7. Handschaltung nach zumindest einem der vorangehenden Ansprüche, **dadurch gekennzeichnet**, daß die Schaltkugel (4) zusätzlich zu den beiden, an entgegengesetzten Seiten vorgesehenen, die Federelemente (9, 10) bildenden Randbereichen an zumindest einer hierzu in einem Winkel von 90° liegenden Seite zumindest eine aus der Kontur der Schaltkugel (4) geringfügig hervorspringende, dünne Federzunge (19, 20) hat, welche durch zwei in die Schaltkugel (4) führende Schlitze (12, 15) gebildet ist.

8. Handschaltung nach zumindest einem der vorangehenden Ansprüche, **dadurch gekennzeichnet**, daß die Schlitze (11 -16) sich zum Inneren der Schaltkugel (4) hin im Querschnitt verengen.

9. Handschaltung nach zumindest einem der vorangehenden Ansprüche, **dadurch gekennzeichnet**, daß in der Schaltkugel (4) Schlitze (11 - 16) in unterschiedliche Richtungen führen.

## Claims

1. Manual gearshift for operating a gearbox of a motor vehicle, in which a manual gear lever (1) is mounted by a lower end (2) in a gearshift housing so as to be pivotable in all directions and which has in the region of its lower end a shift ball (4) which engages in a crank eye (5) of a selector shaft (6, 7), play between the shift ball (4) and the crank eye (5) being compensated by a spring element provided on the shift ball (4), characterised in that the spring element (9, 10) is formed by an edge region of the shift ball (4), which owing to a slot (11, 12, 13, 14) leading into the shift ball (4) is connected on only one side to the remainder of the shift ball (4).

2. Manual gearshift according to claim 1, characterised in that the edge region forming the spring element (9, 10) is partly separated from the remainder of the shift ball (4) by two slots (11, 12; 13, 14) leading from opposite sides parallel to each other into the shift ball (4).

3. Manual gearshift according to claim 1 or 2, characterised in that on each of two opposed sides of the shift ball (4) is provided an edge region forming a spring element (9, 10).

4. Manual gearshift according to one or more of the preceding claims, characterised in that all the slots (11-14) run parallel to each other.

5. Manual gearshift according to one or more of the preceding claims, characterised in that the slots (11-14) run parallel to the direction of shifting of the manual gear lever (1).

6. Manual gearshift according to one or more of the preceding claims, characterised in that the shift ball (4), in addition to the two slots (11-14) which enter it in each case on one side from opposite directions and which form the spring elements (9, 10), between these pairs of slots (11, 12; 13, 14) have further slots (15, 16) leading into the shift ball (4).

7. Manual gearshift according to one or more of the preceding claims, characterised in that the shift ball (4), in addition to the two edge regions provided on opposite sides and forming spring elements (9, 10), has, on at least one side which is at an angle of 90° thereto, at least one thin spring tab (19, 20) which projects slightly from the contour of the shift ball (4) and which is formed by two slots (12, 15) leading into the shift ball (4).

8. Manual gearshift according to one or more of the preceding claims, characterised in that the slots (11-16) narrow in cross-section towards the interior of the shift ball (4).

9. Manual gearshift according to one or more of the preceding claims, characterised in that in the shift ball (4), slots (11-16) lead in different directions.

## Revendications

1. Dispositif de changement de vitesse manuel pour la commande d'une boîte de vitesses d'un véhicule automobile, dans lequel un levier de changement de vitesse (1) est monté par son extrémité inférieure (2) dans un boîtier decommande avec possibilité de pivotement dans toutes les directions et porte dans la région de son extrémité inférieure une sphère de commande (4) qui s'engage dans un oeil (5) d'une tringle de commande (6, 7), le jeu entre la sphère de commande (4) et l'oeil (5) étant compensé par un élément élastique prévu sur la sphère de commande (4), caractérisé par le fait que l'élément élastique (9, 10) est formé par une zone périphérique de la sphère de commande (4) qui par la présence d'une fente (11, 12, 13, 14) qui s'étend vers l'intérieur de la sphère de commande (4) est reliée d'un côté seulement au reste de la sphère de commande (4).

2. Dispositif de changement de vitesse manuel selon la revendication 1, caractérisé par le fait que la zone périphérique qui constitue l'élément élastique (9, 10) est partiellement séparée du reste de la sphère de commande (4) par deux fentes (11, 12, 13, 14) mutuellement parallèles qui s'étendent à partir de deux côtés opposés de la sphère de commande et vers l'intérieur de la sphère de commande (4).

3. Dispositif de changement de vitesse manuel selon la revendication 1 ou 2, caractérisé par le fait qu'une zone périphérique formant un élément élastique (9, 10) est prévue sur deux côtés opposé de la sphère de commande (4).

4. Dispositif de changement de vitesse manuel selon une des revendications précédentes, caractérisé par le fait que toutes les fentes (11 - 14) sont parallèles entre elles.

5. Dispositif de changement de vitesse manuel selon une des revendications précédentes, caractérisé par le fait que les fentes (11 - 14) s'étendent parallèlement à la direction de manoeuvre du levier de changement de vitesse.

6. Dispositif de changement de vitesse manuel selon au moins une des revendications précédentes, caractérisé par le fait que la sphère de commande (4), en plus des deux fentes (11, 14) qui s'étendent à partir de deux côtés opposés et définissent les zones périphériques formant les éléments élastiques (9, 10), porte des fentes (15, 16) supplémentaires qui s'étendent vers l'intérieur de la sphère de commande (4) entre les paires de fentes (11, 12, 13, 14).

7. Dispositif de changement de vitesse manuel selon au moins une des revendications précédentes, caractérisé par le fait que la sphère de commande (4), en plus des deux fentes (11, 14) qui s'étendent à partir de deux côtés opposés et définissent les zones périphériques formant les éléments élastiques (9, 10), sur un côté disposé à 90° par rapport aux premiers, porte au moins une fine languette élastique (19, 20) faiblement en saillie par rapport au contour de la sphère de commande (4), qui est définie par deux fentes (12, 15) s'étendant vers l'intérieur de la sphère de commande (4).

8. Dispositif de changement de vitesse manuel selon au moins une des revendications précédentes, caractérisé par le fait que la section transversale des fentes (11-16) diminue en direction de l'intérieur de la sphère de commande (4).

9. Dispositif de changement de vitesse manuel selon au moins une des revendications précédentes, caractérisé par le fait que des fentes (11-16) s'étendent dans différentes directions à l'intérieur de la sphère de commande (4),
